# EUROPEAN PATENT APPLICATION

(11) **EP 2 471 644 A1**
(43) Date of publication of application: **04.07.2012**
(21) Application number: 10016229.6
(22) Date of filing: 31.12.2010
(51) Int. Cl.: B29C 45/02, B29C 45/46, B29C 45/53, B29B 13/02, B29B 13/08, B29C 35/02, B29C 45/56

(54) **System and method for moulding micro and mini plastic parts**

(71) Applicant: Fundació Privada Ascamm, 08290 Cerdanyola del Vallès (ES)
(72) Inventor: Plantà Torralba, Francisco Javier, 08290 Cerdanyola del Vallès (Barcelona) (ES); Puliga, Francesco, 08290 Cerdanyola del Vallès (Barcelona) (ES); Escudero Martínez, Encarnación, 08290 Cerdanyola del Vallès (Barcelona) (ES); Colavizza, Floyd, Enrique, 08290 Cerdanyola del Vallès (Barcelona) (ES)
(74) Representative: Gislon, Gabriele

(57) **Abstract**

System and method for moulding micro and mini plastic parts

Comprises at least one mould cavity (31, 31a) configured in a mould (M) with one inlet (16) for supplying plastic material to a chamber (32) using an ultrasonic vibration element (1) driven by an ultrasound generator, with an end portion (1a) of the ultrasonic vibration element (1) reaching said chamber (32), through an access opening (33), where a relative movement between the end portion (1a) and said mould (M) is produced so that said portion (1a) engages with the supplied plastic material P and exerts a first pressure thereon upon activation of said ultrasonic vibration element (1) and wherein at least an additional second pressure on the plastic material inside said at least one cavity (31, 31a) is produced through an opening (40) in communication with said at least one mould cavity (31, 31a).

## Description

### Field of the invention

The present invention belongs to the chemical industry area, specifically the field of transforming plastics by moulding.

The invention refers to a system intended for moulding micro and mini plastic parts or pieces which uses ultrasonic vibration as a source of energy for melting the plastic material that is introduced to the mould cavity or cavities by the help of an ultrasonic device. The plastic is supplied to the device continuously in the form of a thread or strip, or discontinuously by means of granules or micro granules.

In the present description micro plastic part will be understood as a plastic part having a weight less than 1 gram with a tolerance of 50 µgram or less, or parts with 200 µm of wall thickness or less, or parts having a greater weight but including defined microstructures o micro structural details. A mini plastic part is one having a volume or dimension slightly greater than the above range of values with a weight from 1 to 10 grams and dimensions of 1 mm for a 2D piece to 100 mm for a 3D piece. A 2D piece is one having 2 similar dimensions and a third one 100 or 1000 times greater or lower. A 3D piece is one having the three dimensions similar with only differences among them of 10 to 15%.

### Background of the invention

EP 930144 describes an injection machine aided by ultrasounds and a method for using it.

DE 102008037103 discloses a plasticization and injection device having a supplying unit for unplasticized injection moulding material. The plasticized unit is closed for fusing and homogenizing of the injection moulding material. The plasticized unit is formed as ultrasound plasticized unit, which is assigned to the injection piston as injection device.

EP 2189264 of the same inventors of the present patent application discloses an ultrasonic device for moulding micro plastic parts comprising a mould cavity, an ultrasonic vibration element with and end portion inserted tightly into a chamber in communication with the mould cavity and movement means for generating a relative movement between the end portion and said mould cavity so that said end portion engages with the supplied plastic material and exerts a pressure of pre-determined magnitude thereon upon activation of said ultrasonic vibration element.

While the proposal of said last antecedent performs in good manner, problems have been discovered related to the volume of the sprue or slag portion of the moulded parts imposing severe limitations in particular with regard to obtain some micro plastic parts and mainly when dealing with mini plastic parts.

The present invention appears as a development of said referred last proposal and includes means to minimize the sprue of the injected micro and mini plastic parts. Thanks to this the volume of the obtained plastic parts increases and somewhat larger pieces may be produced.

### Brief description of the invention

The invention provides a system for moulding micro and mini plastic parts, comprising as in the previous patent application EP 2189264, following parts:
- at least one mould cavity in a mould (M);
- one inlet in said mould for supplying plastic material P to a chamber able to establish a communication with said mould cavity;
- an ultrasonic vibration element driven by an ultrasound generator, an end portion of said ultrasonic vibration element reaching said chamber, through an access opening for melting the plastic material P when activated; and
- movement means for generating a relative displacement between said mould (M) and said ultrasonic vibration element so that said end portion thereof engages with the supplied plastic material P and exerts a pressure thereon

In order to solve the aforementioned drawbacks this invention proposes to provide one second entrance or opening in communication with said at least one mould cavity and the use a means for exerting a controlled pressure on the plastic material inside said mould cavity through said second opening, through said chamber or through both of the passages in communication with the mould cavity.

In a first embodiment the means for exerting pressure are located into or are operative through said second opening in communication with said at least one mould cavity.

As per a specific embodiment the means for exerting pressure are inserted in said second opening of said at least one mould cavity in an opposite direction with respect to said end portion or tip of the ultrasonic vibration element driven by an ultrasound generator.

In a particular and preferred embodiment the means for exerting pressure inserted in said second opening comprise at least one piston.

The insertion path of said means for exerting pressure and the vibration line of action of said ultrasonic vibration element (1) can be parallel or coincident on a same line of action.

As per one embodiment the insertion path of said means for exerting pressure and the vibration line of action of said ultrasonic vibration element are vertical and said piston is positioned in an upper position with respect to the ultrasonic vibration element (1).

An energy direction configuration with a polyhedral shaped can be included either at the end of said piston or at the end of said tip of the ultrasonic vibration element, said energy direction providing end mating surfaces with the at least one mould cavity of the mould.

In a further embodiment the means for exerting pressure inserted in the second opening comprise another ultrasonic vibration element with an end portion, driven by an ultrasound generator.

According to this invention either the end portion of the ultrasonic vibration element or the piston or alternatively the end portion of a second ultrasonic vibration element are movable and the corresponding mating element is mounted in a stationary position in the mould.

The invention also refers to a method for moulding micro and mini plastic parts, in at least one mould cavity configured in a mould M with one inlet for supplying plastic material to a chamber able to be in communication with said at least one mould cavity, using an ultrasonic vibration element driven by an ultrasound generator, with an end portion of said ultrasonic vibration element reaching said chamber through an access opening to melting the plastic when said ultrasonic vibration element is activated, comprising
- producing a relative movement between the end portion and said mould M so that said portion engages with the supplied plastic material P and exerts a pressure thereon, and
- producing a pressure on the plastic material inside said at least one cavity through an opening in communication with said at least one mould cavity.

Said pressure can be obtained by means of:
- a piston linearly displaceable within a passage reaching said opening;
- an end portion of a second ultrasonic vibration element located within said opening.
- both a piston and an end portion of a second ultrasonic vibration element or either with end portions of two ultrasonic vibration elements.

The foregoing and other advantages and features of the invention will be better understood from the following description of the attached drawings showing the proposed system and method.

### Brief description of the drawings

Figs. 1 to 3 are schematic views to illustrate the principles of this invention (both the system and steps of the method) according to a first embodiment.
Fig. 4 reveals another embodiment of the invention referring another arrangement of the energy direction configuration used.
Fig. 5 depictures still another embodiment.

In the Fig. 6 an alternative embodiment of the invention is depictured.

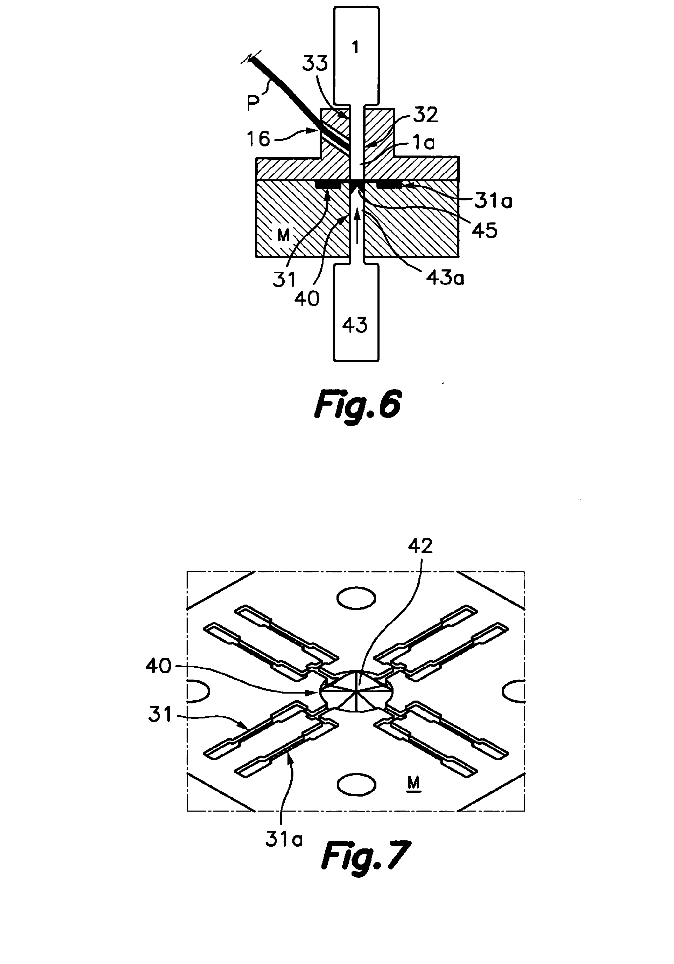

Lastly Fig. 7 illustrates a fragmentary view of a mould with several mould cavities according to the above description and including an energy direction configuration of one member used.

### Detailed description of several embodiments of the invention

This invention discloses a system suitable for moulding micro and mini plastic parts, including:
a) at least one mould cavity 31, 31a in a mould M (see Fig. 7);
b) one inlet 16 in said mould M for supplying plastic material P to a chamber 32 provided with an access opening 33, said chamber 32 able to establish a communication with said at least one mould cavity 31, 31a;
c) an ultrasonic vibration element 1 driven by an ultrasound generator,
d) movement means for generating a relative displacement between said chamber 32 and said mould M;
e) means for introducing the plastic material P form said chamber 32 into said at least one mould cavity 31, 31a, and
f) means to activate said ultrasonic vibration element to melt the plastic material P once introduced to said at least one mould cavity 31, 31a;
g) an opening 40 in said mould M, in communication with said mould cavity 31, 31a; and
h) means for exerting a pressure on the plastic material inside said mould cavity 31, 31a through said second opening 40, through said chamber (32) or through both passages.

Features a) to f) are essentially according to previous cited EP 2189264.

The provision of a second opening or passage 40 reaching said at least one moulding cavity 31, 31a, allows to apply the pressure on the chamber for either said opening 40 or through the chamber 32, or for both passages, using different means that will be explained. In all the cases an ultrasonic vibration element is used to melt the plastic material P, but it can produce a pressure or not and in the second case another member will provide said pressure assisting in the material filling the moulding cavities.

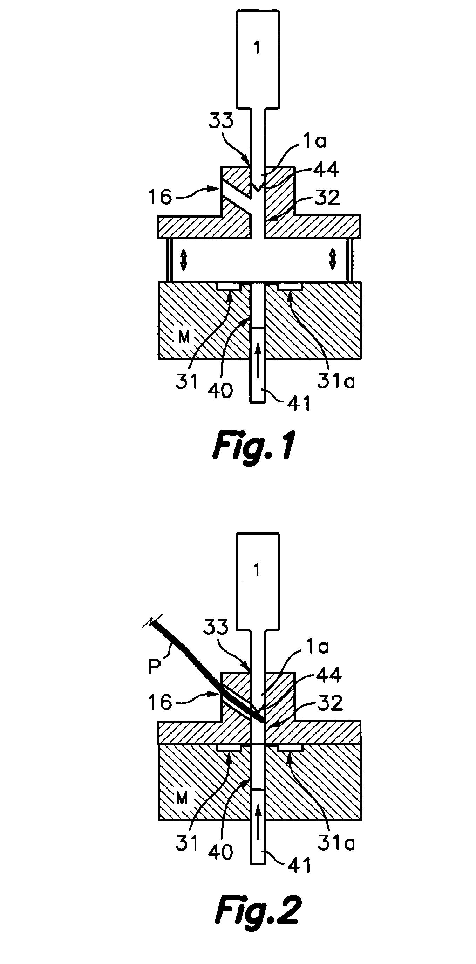

As per the embodiments of Figs. 1 to 4, the means for exerting pressure inserted in said second opening 40 comprise one piston 41.

As previous indicated and illustrated in the figures the insertion path of said means for exerting pressure and the vibration line of action of said ultrasonic vibration element 1 are parallel or coincident.

In all the embodiments illustrated in the figures the insertion path of said means for exerting pressure and the vibration line of action of said ultrasonic vibration element 1 are vertical, this arrangement facilitating the introduction of the plastic material to the mould cavities 31, 31a, and the control of the ultrasonic vibration element and pressure means.

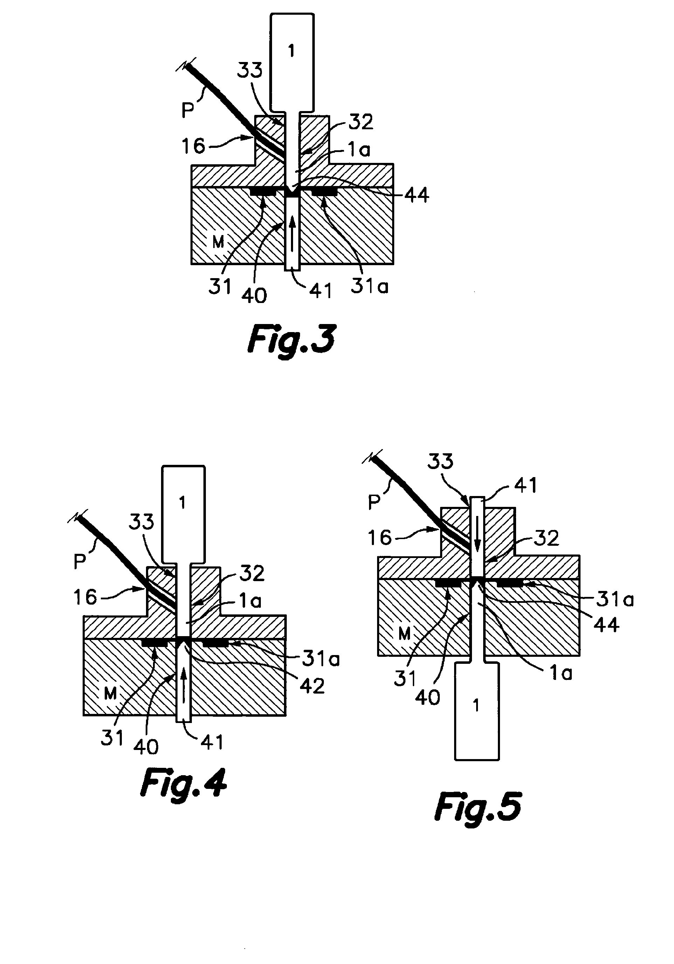

In the embodiment of Fig. 5, the piston 41 is positioned in an upper position with respect to an ultrasonic vibration element 1, and in this case the piston 41 ends in a flat surface responsible for introducing the plastic material into the cavities 31, 31a of the mould M, and an end portion or tip 1a of the ultrasonic vibration element 1 is snugly introduced within the second opening 40.

In the embodiment of Fig. 4 the end of the piston 41 (movably inserted within the opening or passage 40) includes an energy direction configuration 42 with a polyhedral shaped ridge moulded providing end mating surfaces with said at least one mould cavity 31, 31a of the mould M.

Such an energy direction configuration 44 is also arranged on the end portion 1a of the ultrasonic vibration element 1 in the embodiments of the Figs. 1 to 3 and 5, in this last one the ultrasonic vibration element 1 being secured inside the passage 40, in a lower position and the piston 41, movable, in an upper position ending in a flat surface used to introduce and press the plastic material P.

In the embodiment of the Fig. 6 the means for exerting pressure inserted in said second opening are obtained by using another ultrasonic vibration element 43 with an end portion 43a, driven by an ultrasound generator. In this arrangement in general only the ultrasonic vibration element 1 is movable, in order to introduce the plastic material P towards the mould cavities 31, 31a. In this embodiment (Fig. 6) and end portion of the ultrasonic vibration elements 43 includes an energy direction configuration 45 with a polyhedral shaped ridge, as previously disclosed, providing end mating surfaces with said mould cavities 31, and 31a.

The referred figures allow to understand the method this invention implements intended for moulding micro and mini plastic parts, in cavities 31, 31a configured in a mould M with one inlet 16 for supplying plastic material to a chamber 32 able to be in communication with said at least one mould cavity 31, 31a, comprising the use of an ultrasonic vibration element 1 driven by an ultrasound generator, with an end portion 1a of said ultrasonic vibration element 1 reaching said chamber 32, through an access opening 33, and comprising:
i. providing a relative movement between the end portion 1 a and said mould M so that said portion 1a engages with the supplied plastic material P and exerts a first pressure thereon upon activation of said ultrasonic vibration element 1; and
ii. producing an additional second pressure on the plastic material inside said mould cavities 31, 31a through a second opening 40 in communication with said at least one mould cavity 31, 31a.

As the attached drawing figures evidence said pressure can be obtained by means of:
- a piston 41 linearly displaceable within said opening 40 or within said chamber 32;
- an end portion 1a, or 43a of an ultrasonic vibration element 1, 43 located within said opening 40.

As per the method proposed either the piston 41 or the first 1 or second 43 ultrasonic vibration elements are movable relative to the mould M to implement above steps.

Also at least one energy direction configuration is used arranged on the end portion 1a, 43a of ultrasonic vibration elements 1, 43, or on an end face of the piston 41 providing said pressure means.

## Claims

1. A system for moulding micro and mini plastic parts, including:
a) at least one mould cavity (31, 31a) in a mould (M);
b) one inlet (16) in said mould (M) for supplying plastic material P to a chamber (32) provided with an access opening (33), said chamber (32) being able to establish a first communication with said at least one mould cavity (31, 31a);
c) an ultrasonic vibration element (1) driven by an ultrasound generator;
d) movement means for generating a relative displacement between said chamber (32) and said mould (M);
e) means for introducing the plastic material P from said chamber (32) into said at least one mould cavity (31, 31a), and
f) means to activate said ultrasonic vibration element to melt the plastic material P once introduced to said at least one mould cavity (31, 31a);
**characterized in that**
an end portion (1a) or tip of said ultrasonic vibration element (1) is able to reach or is positioned near said at least one mould cavity (31, 31 a);
said mould (M) comprises an opening (40) providing a second communication with said mould cavity (31, 31a); and
means for exerting a pressure on the plastic material inside said mould cavity (31, 31a) through said second opening (40), through said chamber (32) or through both passages are provided.

2. The system according to claim 1, wherein said means for exerting said pressure are located into said opening (40) in communication with said at least one mould cavity (31, 31a).

3. The system according to claim 2, wherein said means for exerting said pressure are movably inserted in said opening (40) of said cavity (31) in an opposite direction with respect to said means for introducing plastic into said at least one mould cavity (31, 31a) through said chamber (32).

4. The system according to claim 3, wherein said means for exerting said pressure inserted in said opening (40) comprise one piston (41).

5. The system according to claims 2 to 4, **characterized in that** insertion path of said means for exerting said second pressure and the vibration line of action of said ultrasonic vibration element (1) are parallel.

6. The system according to claims 2 to 4, wherein insertion path of said means for exerting pressure and the vibration line of action of said ultrasonic vibration element (1) are coincident.

7. The system according to claims 2 to 4, wherein the insertion path of said means for exerting pressure and the vibration line of action of said ultrasonic vibration element (1) are vertical.

8. The system according to claim 7 when depending on claim 4, wherein said piston (41) is positioned in an upper position with respect to said ultrasonic vibration element (1).

9. The system according to claim 4, wherein the end of said piston (41) includes an energy direction configuration (42) with a polyhedral shaped ridge moulded providing end mating surfaces with said at least one mould cavity (31, 31a).

10. The system according to claim 1, wherein the end portion (1a) of said ultrasonic vibration element (1) includes an energy direction configuration (44) with a polyhedral shaped ridge moulded providing end mating surfaces with said at least one mould cavity (31, 31a).

11. The system according to any of the claims 1 to 3, wherein said means for exerting pressure inserted in said opening (40) comprise another ultrasonic vibration element (43) with an end portion (43a), driven by an ultrasound generator.

12. The system according to claim 11, wherein and end portion of at least one of said ultrasonic vibration elements (1, 43) includes an energy direction configuration (45) with a polyhedral shaped ridge moulded providing end mating surfaces with said at least one mould cavity (31, 31a).

13. Method for moulding micro and mini plastic parts, in at least one mould cavity (31, 31a) configured in a mould (M) with one inlet (16) for supplying plastic material to a chamber (32) able to be in communication with said at least one mould cavity (31, 31a), using an ultrasonic vibration element (1) driven by an ultrasound generator that melts the plastic material P that is introduced to said at least one mould cavity (31, 31a), where a relative movement between said chamber (32) and said mould (M) is produced, plastic material P is introduced from said chamber (32) into said at least one mould cavity (31, 31a), and said ultrasonic vibration element is activated,
**characterized in that** a pressure on the plastic material inside said at least one cavity (31, 31a) is produced through an opening (40) providing a second communication with said at least one mould cavity (31, 31a), through said chamber (32) or through both passages.

14. Method, according to claim 13, wherein said pressure is obtained by means of a piston (41) linearly displaceable within said opening (40) or within said chamber (32)

15. Method, according to claim 13, wherein said pressure is obtained by means of an end portion (1a) of said ultrasonic vibration element (1) or by an end portion (43a) of a second ultrasonic vibration element (43) located within said opening (40) o within said chamber (32).
